# EUROPÄISCHE PATENTSCHRIFT

(11) **EP 1 886 752 B1**
(45) Veröffentlichungstag und Bekanntmachung des Hinweises auf die Patenterteilung: **23.12.2009**
(21) Anmeldenummer: 07013053.9
(22) Anmeldetag: 04.07.2007
(51) Int. Cl.: B23D 45/04, B23D 47/02

(54) **Kapp- und Gehrungssäge mit einem Drehtisch**
Chop and mitre saw with a turntable
Scie à onglet radial dotée d'un plateau tournant

(30) Priorität: 11.08.2006 DE 202006012418 U
(43) Veröffentlichungstag der Anmeldung: 13.02.2008
(73) Patentinhaber: Metabowerke GmbH, 72622 Nürtingen (DE)
(72) Erfinder: Bergmann, Laurenz, 49733 Haren/Ems (DE)
(74) Vertreter: Gesthuysen, von Rohr & Eggert

(56) Entgegenhaltungen:
- EP-A- 1 595 630

## Beschreibung

Die Erfindung betrifft eine Kapp- und Gehrungssäge mit den Merkmalen des Oberbegriffs von Anspruch 1, wie sie aus der EP 15 95 630 bekannt ist.

Kapp- und Gehrungssägen werden zur Bearbeitung aller Arten von Werkstoffen eingesetzt. Ein besonderes Anwendungsfeld finden Kapp- und Gehrungssägen bei der Holzbearbeitung. Das schließt nicht aus, daß die Lehre der vorliegenden Erfindung für Kappsägen anderer Einsatzgebiete, insbesondere für die Kunststoffbearbeitung und Metallbearbeitung Anwendung finden kann.

Die bekannte Kapp- und Gehrungssäge, von der die Erfindung ausgeht (DE-U-203 13 885), weist einen Träger auf, mit dem dieses Gerät auf einer Unterlage, beispielsweise einer Werkbank steht. Bildet der Träger selbst randseitig eine Werkstückauflagefläche, so ist ein um eine Hochachse drehbar gelagerter Drehtisch im Träger eingelassen. Auf diesem Drehtisch setzt sich die Werkstückauflagefläche fort. Es gibt aber auch Varianten, bei-denen der Träger seitlich des Drehtisches auf ein kleines Stück reduziert ist und eine nur noch ganz geringe oder gar keine Werkstückauflagefläche bildet. Dann ist der Drehtisch am Träger drehbar gelagert.

Bei der bekannten, zuvor erläuterten Kapp- und Gehrungssäge befindet sich am Drehtisch eine Halterung für ein Sägeaggregat, das oberhalb der Werkstückauflagefläche angeordnet ist und einen Antriebsmotor sowie ein davon angetriebenes Sägeblatt aufweist. Dieses Sägeaggregat kann an der Halterung um eine Querachse geschwenkt werden, wobei das Sägeblatt aus der angehobenen Ruhestellung in eine abgesenkte Sägestellung und umgekehrt schwenkt. Mit dieser Bewegung des Sägeblattes kann ein auf der Werkstückauflagefläche befindliches Werkstück abgeschnitten - gekappt - werden.

Zur Fixierung des Werkstücks auf der Werkstückauflagefläche dient ein Werkstückanschlag, der sich in einer Mittelstellung des Drehtisches rechtwinklig bezüglich der Ebene des Sägeblattes erstreckt, so daß das Werkstück "gegen" den Werkstückanschlag gesägt werden kann.

Bei der bekannten, zuvor erläuterten Kapp- und Gehrungssäge ist die Schnittlänge dadurch vergrößert worden, daß zusätzlich eine Zugfunktion realisiert ist. Das Sägeblatt kann hier das Werkstück nicht nur infolge der Schwenkbewegung um die Querachse durchtrennen, sondern auch noch infolge einer Verschiebebewegung senkrecht zur Querachse und parallel zur Werkstückauflagefläche. Die bekannte Kapp- und Gehrungssäge, von der die Erfindung ausgeht, ist somit eine kombinierte Kapp-, Gehrungs- und Zugsäge. Diese zeichnet sich weiter dadurch aus, daß der Drehtisch einen kleinen Durchmesser hat, jedoch in Längsrichtung einen Auslegerarm mit einem darin weiter verlaufenden Eintauchschlitz für den Zahnkranz des Sägeblattes aufweist.

Die zuvor erläuterte, bekannte Kapp- und Gehrungssäge mit Drehtisch erlaubt es, wechselseitige und zueinander komplementäre Gehrungsschnitte gleichen Winkelmaßes auszuführen. Um beispielsweise eine Sockelleiste für eine Raumecke auf Gehrung zu schneiden, wird zunächst der Winkel der Raumecke aufgenommen. Anschließend wird der Drehtisch mit Hilfe einer am Träger befindlichen Winkelskala beispielsweise nach links auf das gewünschte Winkelmaß, das der Hälfte des gemessenen Winkels entspricht, eingestellt. Dann wird die am Anschlag angelegte Sockelleiste auf Gehrung gesägt. Anschließend wird der Drehtisch in entgegengesetzter Richtung, also nach rechts gedreht, bis dort an der Winkelskala dasselbe Winkelmaß erreicht wird. Die mit der ersten Sockelleiste zusammenstoßende zweite Sockelleiste wird dann mit diesem Winkelmaß am Werkstückanschlag anliegend gesägt. Bei dem zuvor erläuterten, bei der bekannten Kapp- und Gehrungssäge erforderlichen Verfahren sind fehlerhafte Berechnungen oder Einstellungen der Winkelmaße an der Tagesordnung.

Eine gleichgelagerte Problematik stellt sich auch bei einer Kapp- und Gehrungssäge mit einem Drehtisch, bei der sich das Sägeaggregat nicht oberhalb der Werkstückauflagefläche befindet, sondern unterhalb der Werkstückauflagefläche angeordnet ist, wobei das Sägeblatt die Werkstückauflage wie bei einer Kreissäge von unten her in einem Sägeschlitz durchsetzt. Eine insoweit bekannte Tisch-, Kapp-, Gehrungs- und Zugsäge (EP-B-0 988 126) erfordert für das Ausführen zueinander komplementärer Gehrungsschnitte ein entsprechendes Verfahren.

Das zuvor aufgezeigte Problem bei dem Ausführen von zueinander komplementären Gehrungsschnitten ist für eine Kapp- und Gehrungssäge ohne Drehtisch bereits einer gewissen Lösung zugeführt worden (EP-B-0 994 766). Bei dieser Kapp- und Gehrungssäge besteht der Werkstückanschlag aus zwei um eine gemeinsame Achse schwenkbaren Anschlagmitteln, die derart miteinander gekoppelt sind, daß eine Winkelhalbierende des durch die beiden Hälften des Werkstückanschlags, also die beiden Anschlagmittel, eingeschlossenen Winkels stets ortsfest bezüglich der Ebene des Sägeblattes ist. Die gemeinsame Achse der beiden Anschlagmittel schneidet in jeder Schwenkposition der Anschlagmittel Verlängerungen von dem Werkstück zugewandten Anschlagflächen der Anschlagmittel. Die beiden Anschlagmittel sind verbunden mit ebenfalls um die gemeinsame Achse schwenkbaren Schwenkarmen, die unterhalb der Werkstückauflagefläche angeordnet sind. Die beiden insgesamt den Werkstückanschlag bildenden Anschlagmittel sind durch ein einziges Betätigungselement gemeinsam betätigbar, beispielsweise eine Kurbel oder ein Handrad. Die Kraftübertragung kann durch eine Gewindespindel und/oder ein Hebelgetriebe und/oder eine Kulissenanordnung erfolgen. Im einzelnen wird für die verschiedenen Konstruktionsmöglichkeiten eines synchron, entgegengesetzt arbeitenden Antriebes für die miteinander gekoppelten Anschlagmittel auf den Offenbarungsgehalt dieser Entgegenhaltung verwiesen, der hiermit durch Bezugnahme auch zum Offenbarungsgehalt der vorliegenden Anmeldung gemacht wird.

Soll bei der bekannten Kapp- und Gehrungssäge ohne Drehtisch ein entsprechender Gehrungsschnitt mit vorgegebenem Winkelmaß ausgeführt werden, so werden die beiden Anschlagmittel in dem passenden spitzen Winkel des doppelten Winkelmaßes zueinander ausgerichtet. Dann können im zuvor erläuterten Beispiel beide betroffenen Sockelleisten am Ende fehlerfrei auf das richtige Winkelmaß auf Gehrung geschnitten werden.

Nachteilig bei der zuvor erläuterten Kapp- und Gehrungssäge ohne Drehtisch ist zunächst einmal die mühselige Umrüstung vom normalen Kappsägen auf Gehrungssägen. Bei langen Werkstücken (Leisten) benötigt man eine Abstützung für die Leiste am vom Sägeblatt fernen Ende. Auch kann man die gewünschten Gehrungsschnitte nur am Ende einer Leiste anbringen. Man muß also eine längere Leiste vorher mit einem Kappschnitt auf die gewünschte Länge kappen, dann den Werkstückanschlag umstellen und schließlich den Gehrungsschnitt anbringen.

Der Lehre liegt nun das Problem zugrunde, die eingangs erläuterte Kapp- und Gehrungssäge mit Drehtisch so auszugestalten und weiterzubilden, daß zueinander komplementäre Gehrungsschnitte mit gleichem Winkelmaß einfach und zuverlässig ausgeführt werden können.

Das zuvor aufgezeigte Problem ist bei einer Kapp- und Gehrungssäge mit einem Drehtisch gemäß den Merkmalen von Anspruch 1 gelöst. Bevorzugte Ausgestaltungen und Weiterbildungen sind Gegenstand der Unteransprüche.

Bei der erfindungsgemäßen Kapp- und Gehrungssäge mit einem Drehtisch wird die Funktion des Drehtisches für das Ausführen von zueinander komplementären Gehrungsschnitten vorteilhaft ausgenutzt, indem es bei dem gestreckten Werkstückanschlag bleibt. Damit können alle Werkstücke immer in gleicher Position auf der Werkstückauflagefläche gegen den Werkstückanschlag gesägt werden. Die Identität der Winkelmaße der auszuführenden, zueinander komplementären Gehrungsschnitte wird hier dadurch gewährleistet, daß der Drehtisch nach links und rechts jeweils gegen ein verstellbares Blockiermittel gedreht wird. Die beiden Blockiermittel sind miteinander gekoppelt und führen dazu, daß das Winkelmaß der Drehung des Drehtisches nach links und rechts immer identisch ist. Damit liegt die Ebene des Sägeblattes links wie rechts im identischen, jedoch entgegengerichteten Winkel bezüglich des ortsfest verbleibenden Werkstückanschlages.

Mit der erfindungsgemäßen Kapp- und Gehrungssäge lassen sich die gewünschten, zueinander komplementären Gehrungsschnitte an allen Arten von Werkstükken einfach und schnell ausführen. Auch an langen Leisten kann sogleich ein Gehrungsschnitt irgendwo in der Mitte ausgeführt werden. Die Handhabung und Arbeitsgeschwindigkeit mit der erfindungsgemäßen Kapp- und Gehrungssäge mit Drehtisch ist sehr hoch.

Die Lehre der Erfindung läßt sich bei einer Kapp- und Gehrungssäge mit einem oberhalb der Werkstückauflagefläche angeordneten Sägeaggregat, das um eine Querachse schwenkbar ist, ebenso einsetzen wie bei einer Radialarmsäge, bei der das Sägeaggregat nicht geschwenkt, sondern lediglich aufwärts und abwärts verschoben wird, bei gleichzeitiger Realisierung einer Zugfunktion. Die Lehre der Erfindung läßt sich überdies auch bei einer Kapp- und Gehrungssäge mit einem Drehtisch und unter der Werkstückauflage befindlichem Sägeaggregat der weiter oben erläuterten Art realisieren (EP-B-0 988 126).

Im folgenden wird nun die Erfindung anhand einer lediglich Ausführungsbeispiele darstellenden Zeichnung näher erläutert. In der Zeichnung zeigt
- Fig. 1: eine perspektivische Ansicht einer Kapp-, Gehrungs- und Zugsäge mit einer Winkeleinstellung am Drehtisch zur Ausführung von Gehrungsschnitten,
- Fig. 2: in einer schematischen Draufsicht, das Sägeaggregat und weitere nicht interessierende Bestandteile weggelassen, Drehtisch und Träger eines ersten Ausführungsbeispiels einer erfindungsgemäßen Kapp- und Gehrungssäge,
- Fig. 3: in einer Fig. 2 entsprechenden Darstellung ein zweites Ausführungsbeispiel von Drehtisch und Träger einer erfindungsgemäßen Kapp- und Gehrungssäge.

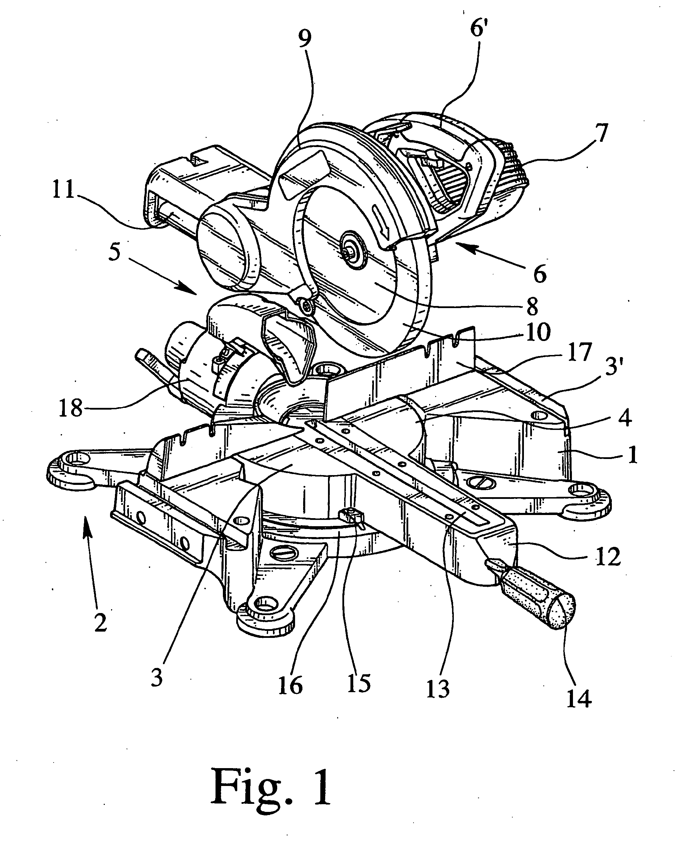

Die in Fig. 1 dargestellte Kapp-, Gehrungs- und Zugsäge könnte, ohne daß dies Fig. 1 erkennen läßt, eine solche sein, die die Besonderheiten der Lehre der Erfindung beinhaltet.

Anhand von Fig. 1 soll zunächst der grundsätzliche Aufbau einer solchen Kapp-, Gehrungs- und Zugsäge erläutert werden. Für die vorliegend geschilderte Problemlösung ist Voraussetzung lediglich das Vorhandensein einer Kapp- und Gehrungssäge mit einem an oder in einem Träger um eine Hochachse drehbar gelagerten Drehtisch. Das dargestellte Ausführungsbeispiel zeigt eine solche Säge mit einer zusätzlichen Zugfunktion. Das ist aber keine zwingende Voraussetzung für die Verwirklichung der Lehre.

Die in Fig. 1 dargestellte Kapp- und Gehrungssäge weist zunächst einen Träger 1 auf, der mit entsprechenden Stützfüßen 2 beispielsweise auf einem Arbeitstisch abgestellt werden kann. Im dargestellten und bevorzugten Ausführungsbeispiel bildet bereits der Träger 1 selbst einen Abschnitt 3' einer Werkstückauflagefläche 3 aus. Bei dem dargestellten und insoweit bevorzugten Ausführungsbeispiel gilt dabei, daß im Träger 1 ein um eine Hochachse drehbar gelagerter Drehtisch 4 eingesetzt ist. Dieser Drehtisch bildet den wesentlichen Teil der Werkstückauflagefläche 3.

Im dargestellten Ausführungsbeispiel ist oberhalb des Trägers 1 an einer Halterung 5 ein Sägeaggregat 6 angeordnet, das einen Antriebsmotor 7 und ein Sägeblatt 8 aufweist. Das Sägeblatt 8 wird über ein hier verdecktes Getriebe von dem Antriebsmotor 7 angetrieben und ist nach oben hin durch eine feststehende Schutzhaube 9 und nach unten hin durch eine Pendelschutzhaube 10 gegen Berührung geschützt.

Zusätzlich zu der Schwenkbewegung, die das Sägeaggregat 6 um seine Querachse an der Halterung 5 ausführen kann, ist es hier außerdem möglich, das Sägeaggregat 6 linear in der Horizontalen zu bewegen. Dabei wird die Bewegungsrichtung durch eine an der Halterung 5 angeordnete Führung für eine oder mehrere Zugstangen 11 festgelegt. Durch Ausüben von Kräften auf einen Betätigungsgriff 6' können die beschriebenen Bewegungen des Sägeaggregates 6 veranlaßt werden.

In Fig. 1 befindet sich das Sägeaggregat 6 in seiner Ruhestellung mit angehobenem Sägeblatt 8.

Anstelle einer solchen Kapp- und Gehrungssäge mit einem schwenkbar um eine Querachse angeordneten Sägeaggregat 6 gilt die Lehre der Erfindung auch für Kapp- und Gehrungssägen in Form von Radialarmsägen, bei denen das Sägeaggregat lediglich aufwärts und abwärts verschoben sowie horizontal gezogen werden kann, ebenso wie für Kapp- und Gehrungssägen, bei denen das Sägeaggregat unter der Werkstückauflagefläche angeordnet ist und das Sägeblatt die Werkstückauflagefläche von unten her in einem Sägeschlitz durchsetzt.

Das in Fig. 1 dargestellte Beispiel einer Kapp- und Gehrungssäge zeigt einen Drehtisch 4 kleinen Durchmessers eingebettet in einem Träger 1, wobei eine ausreichende Schnittlänge für das in Längsrichtung verschiebbare Sägeblatt 8 durch einen Auslegerarm 12 am Drehtisch 4 mit einem darin befindlichen Eintauchschlitz 13 für den Zahnkranz des Sägeblattes 8 gewährleistet ist. Vorne am Auslegerarm 12 befindet sich ein Betätigungsknauf 14 für eine Verriegelung des Drehtisches 4 am Träger 1. Links neben dem Auslegerarm 12 erkennt man am Drehtisch 4 einen Zeiger 15, der mit einer ringförmigen Winkelskala 16 auf dem Rand des Trägers 1 zusammenwirkt. In der in Fig. 1 dargestellten Position befindet sich der Drehtisch 4 in seiner Mittelstellung zur Ausführung von Kappschnitten.

Am Träger 1 befestigt ist ein gegenüber dem Drehtisch 4 feststehender Werkstückanschlag 17, der etwa in der Mitte um den Eintauchschlitz 13 herum eine Aussparung aufweist, so daß das Sägeblatt 8 etwas nach hinten hindurchtreten kann. Außerdem befindet sich hinten an der Halterung 5 eine Staubabsaugung 18.

Der Werkstückanschlag 17 erstreckt sich in einer Mittelstellung des Drehtisches 4 rechtwinklig bezüglich der Ebene des Sägeblattes 8 (Fig. 1). Zur Ausführung von Gehrungsschnitten in einem am Werkstückanschlag 17 anliegenden Werkstück wird der Drehtisch 4 samt Sägeaggregat 6 um das gewünschte Winkelmaß aus der Mittelstellung nach rechts oder nach links gedreht.

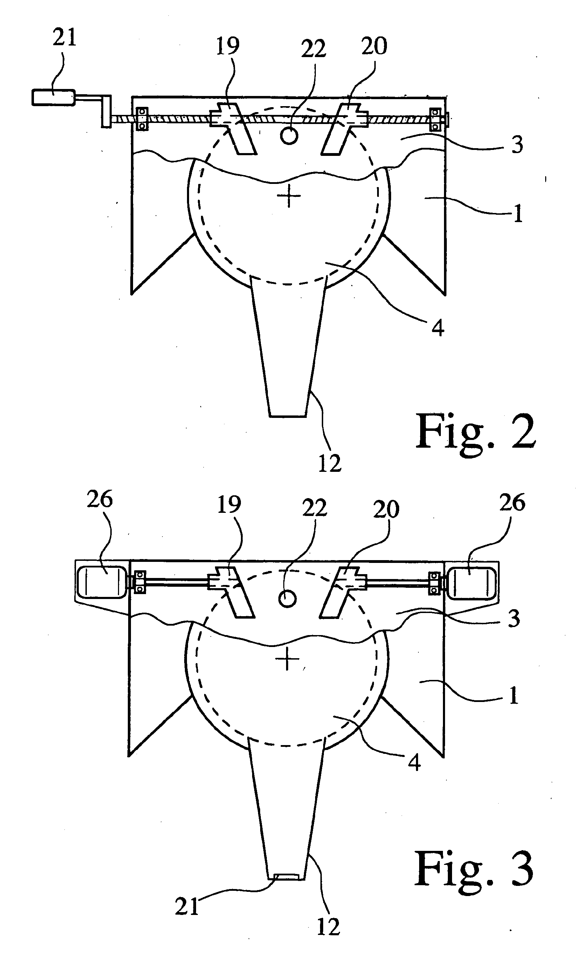

Fig. 2 zeigt nun in einer auf den Träger 1 und den Drehtisch 4 beschränkten ausschnittweisen Darstellung einer erfindungsgemäßen Kapp- und Gehrungssäge die erfindungsgemäße Konstruktion in einer ersten Variante. Da es sich um die Darstellung nach Art einer Draufsicht handelt, ist ein Teil der Werkstückauflagefläche 3 am Drehtisch 4 und am Träger 1 weggebrochen worden, um in den Bereich unter der Werkstückauflagefläche 3 hineinsehen zu können.

Erfindungsgemäß ist hier vorgesehen, daß dem Drehtisch 4 sowohl für eine Drehung nach rechts als auch für eine Drehung nach links jeweils ein verstellbares Blockiermittel 19, 20 zugeordnet ist, durch das die Drehung des Drehtisches 4 in der jeweiligen Richtung auf ein bestimmtes Winkelmaß begrenzbar ist, daß die Blockiermittel 19, 20 derart miteinander gekoppelt sind, daß eine Verstellung des einen Blockiermittels 19 bzw. 20 mit einer gleich großen Verstellung des anderen Blockiermittels 20 bzw. 19 in entgegengesetzter Richtung einhergeht, und daß die beiden Blockiermittel 19, 20 durch ein Betätigungselement 21 gemeinsam betätigbar sind. Im dargestellten und bevorzugten Ausführungsbeispiel ist ferner vorgesehen, daß den Blockiermitteln 19, 20 ein Gegenanschlag 22 zugeordnet ist.

Das dargestellte und insoweit bevorzugte Ausführungsbeispiel zeigt, daß die Blockiermittel 19, 20 am Träger 1, im dargestellten Ausführungsbeispiel unterhalb der Werkstückauflagefläche 3, angeordnet sind und mit einem Gegenstück, insbesondere dem Gegenanschlag 22 am Drehtisch 4 wechselwirken.

Durch Betätigen des gemeinsamen Betätigungselementes 21 können die beiden Blockiermittel 19, 20 synchron, aber gegensinnig bewegt werden. Das für die eine Drehrichtung des Drehtisches 4 eingestellte Winkelmaß wird in gleicher Größe für die andere Drehrichtung des Drehtisches 4 aufgenommen. Dadurch ist ohne weiteres sichergestellt, daß zueinander komplementäre Gehrungsschnitte präzise und schnell ausgeführt werden können. Wesentlich ist dabei, daß der Werkstückanschlag 17 gänzlich unverändert am Träger 1 stehenbleibt, also nicht umgestellt oder umgerüstet werden muß. Das Werkstück liegt also immer am vollen Werkstückanschlag 17 an und ist so optimal für jedweden Sägeschnitt fixiert.

Als Alternative zu dem in Fig. 1 dargestellten Ausführungsbeispiel könnte man auch im Wege einer kinematischen Umkehr vorsehen, daß die Blockiermittel 19, 20 am Drehtisch 4, vorzugsweise unterhalb der Werkstückauflagefläche 3, angeordnet sind und mit einem Gegenstück, insbesondere einem Gegenanschlag 22 am Träger 1 wechselwirken. Die Anordnung der verstellbaren Blockiermittel 19, 20 könnte am Drehtisch 4 in dem in Fig. 2 dargestellten Ausführungsbeispiel rechts und links des Auslegerarms 12 erfolgen. Die beiden Blockiermittel 19, 20 würden dann beispielsweise mit den Rändern 23 am vom Träger 1 gebildeten Ausschnitt zusammenwirken, diese würden also zwei Gegenanschläge bilden.

Bleibt man bei dem in Fig. 2 dargestellten Ausführungsbeispiel, so muß der Gegenanschlag 22 nicht zwingend als der in diesem Beispiel zu erkennende Bolzen ausgeführt sein. Es wäre beispielsweise auch möglich, daß der Gegenanschlag 22 von einem Auslegerarm 12 des Drehtisches 4 gebildet ist.

Bei dem in Fig. 2 dargestellten und bevorzugten Ausführungsbeispiel ist im übrigen vorgesehen, daß der Gegenanschlag 22 zwischen einer mit den Blockiermitteln 19, 20 zusammenwirkenden Arbeitsstellung und einer mit den Blockiermitteln 19, 20 nicht zusammenwirkenden Freigabestellung verstellbar ist. In der Ausgestaltung des Gegenanschlags 22 als Bolzen kann man diesen Bolzen einfach nach oben aus dem Drehtisch 4 herausziehbar ausführen. Es gibt natürlich viele Alternativen zur Realisierung einer solchen Verstellbarkeit des Gegenanschlags 22, beispielsweise ein Verschwenken oder Wegklappen des Gegenanschlags 22.

Bei den beiden in Fig. 2 dargestellten Blockiermitteln 19, 20 ist im übrigen vorgesehen, daß die Blockiermittel 19, 20 in eine funktionslose Freigabestellung verstellbar sind. Die beiden Blockiermittel 19, 20, die hier winkelförmig in die Bewegungsbahn des bolzenartigen Gegenanschlags 22 am Drehtisch 4 ragen, können seitlich nach außen in den Träger 1 verstellt werden.

Das in Fig. 2 dargestellte und bevorzugte Ausführungsbeispiel sieht vor, daß die Blockiermittel 19, 20 mechanisch mittels einer Gewindespindel 24 mit einer Kurbel oder einem Handrad als Betätigungselement 21 verstellbar sind. Die Gewindespindel 24 ist hier in endseitigen Lagern 25 am_Träger 1 unter der Werkstückauflagefläche 3 gelagert. Die Gewindespindel 24 hat zwei Abschnitte mit gleich großer aber entgegengerichteter Gewindesteigung. Das ist in Fig. 2 angedeutet. Eine Führung am Träger 1 und/oder am Drehtisch 4 muß dazu beitragen, daß die Blockiermittel 19, 20 auf der Gewindespindel 24 in richtiger Position verbleiben und beim Verstellen geführt werden.

Alternativen für das in Fig. 2 dargestellte System mit einer Gewindespindel 24 sind Hebelgetriebe und/oder Kulissenanordnungen. Dazu darf nochmals auf die oben bereits genannte EP-B-O 994 766 verwiesen werden, deren Offenbarungsgehalt diesbezüglich zum Offenbarungsgehalt der vorliegenden Anmeldung gemacht wird. Die dort vorgesehenen Antriebssysteme lassen sich durchaus auch hier für die Verstellung der Blockiermittel 19, 20 einsetzen, wenn man entsprechende Modifikationen zur Anpassung an die räumlichen Gegebenheiten vornimmt.

Bei einem am Drehtisch 4 angeordneten System mit den Blockiermitteln 19, 20 könnte man grundsätzlich auch den Betätigungsknauf 14, möglicherweise in einer Doppelfunktion, als Betätigungselement für die Blockiermittel 19, 20 verwenden. Das wäre natürlich eine bedienerfreundliche Lösung.

Das in Fig. 3 dargestellte weitere Ausführungsbeispiel einer erfindungsgemäßen Kapp- und Gehrungssäge zeigt eine andere Konstruktion, nämlich dergestalt, daß die Blockiermittel 19, 20 elektromechanisch ausgeführt und mit einem Schalter oder Taster als Betätigungselement 21 verstellbar sind. Grundsätzlich könnte ein Elektromotor als Antrieb der in Fig. 2 dargestellten Gewindespindel 24 vorgesehen sein. Das in Fig. 3 dargestellte Ausführungsbeispiel zeigt jedoch, daß jedem Blockiermittel 19, 20 ein eigener elektromotorischer Antrieb 26 zugeordnet ist und die Kopplung der Antriebe 26 lediglich steuerungstechnisch erfolgt.

Aus dem Stand der Technik ist es bereits bekannt, mit erhöhtem Kraftaufwand überfahrbare Rastmittel für Winkelverstellungen bei Drehtischen von Kapp- und Gehrungssägen der in Rede stehenden Art einzusetzen (EP-A-1 595 630). Derartige Lösungen sind auch für die Blockiermittel 19, 20 der vorliegenden Konstruktion einsetzbar, für die dann gelten würde, daß sie als mit erhöhtem Kraftaufwand überfahrbare Rastmittel ausgeführt sind.

In Fig. 3 ist angedeutet, daß nach besonderer und bevorzugter Lehre der Erfindung, die insbesondere bei Verwendung elektromotorischer Antriebe 26 einfach und zweckmäßig ist, an der Kapp- und Gehrungssäge eine Winkelskala oder Winkelanzeige für das mit den Blockiermitteln 19, 20 vorgegebene Winkelmaß vorgesehen ist. Anzeigen können grundsätzlich mechanisch, elektromechanisch oder elektronisch sein. Im dargestellten Ausführungsbeispiel kann man andeutungsweise eine LCD-Anzeige erkennen. Diese ist hier an der Spitze des Auslegerarms 12 des Drehtisches 4 angedeutet. Zweckmäßig wäre auch eine Anordnung am Sägeaggregat 6 selbst, beispielsweise benachbart zum Betätigungsgriff 6'.

## Patentansprüche

1. Kapp- und Gehrungssäge
mit einem Träger (1),
mit einem am oder im Träger (1) um eine Hochachse drehbar gelagerten Drehtisch (4), der eine Werkstückauflagefläche (3) bildet,
mit einer am Drehtisch (4) angebrachten Halterung (5) für ein Sägeaggregat (6), das einen Antriebsmotor (7) sowie ein davon angetriebenes Sägeblatt (8) aufweist, und
mit einem am Träger (1) befestigten, gegenüber dem Drehtisch (4) feststehenden Werkstückanschlag (17), an dem ein Werkstück beim Sägevorgang anlegbar ist,
wobei, vorzugsweise, das Sägeaggregat (6) oberhalb der Werkstückauflagefläche (3) angeordnet ist und aus einer Ruhestellung mit angehobenem Sägeblatt (8) in eine Sägestellung mit abgesenktem Sägeblatt (8) und umgekehrt bewegbar, insbesondere um eine Querachse schwenkbar ist,
wobei der Werkstückanschlag (17) sich in einer Mittelstellung des Drehtisches (4) rechtwinklig bezüglich der Ebene des Sägeblattes (8) erstreckt und
wobei zur Ausführung von Gehrungsschnitten in einem am Werkstückanschlag (17) anliegenden Werkstück der Drehtisch (4) samt Sägeaggregat (6) um das gewünschte Winkelmaß aus der Mittelstellung nach rechts oder links gedreht wird, wobei
dem Drehtisch (4) sowohl für eine Drehung nach rechts als auch für eine Drehung nach links jeweils ein verstellbares Blockiermittel (19, 20) zugeordnet ist, durch das die Drehung des Drehtisches (4) in der jeweiligen Richtung auf ein bestimmtes Winkelmaß begrenzbar ist, **dadurch gekennzeichnet,**
**daß** die Blockiermittel (19, 20) derart miteinander gekoppelt sind, daß eine Verstellung des einen Blockiermittels (19 bzw. 20) mit einer gleich großen Verstellung des anderen Blockiermittels. (20 bzw. 19) in entgegengesetzter Richtung einhergeht, und
**daß** die beiden Blockiermittel (19, 20) durch ein Betätigungselement (21) gemeinsam betätigbar sind.

2. Kapp- und Gehrungssäge nach Anspruch 1, **dadurch gekennzeichnet,**
**daß** den Blockiermitteln (19, 20) ein Gegenanschlag (22) zugeordnet ist.

3. Kapp- und Gehrungssäge nach einem der vorhergehenden Ansprüche, **dadurch gekennzeichnet,**
**daß** die Blockiermittel (19, 20) am Träger (1), vorzugsweise unterhalb der Werkstückauflagefläche (3), angeordnet sind und mit einem Gegenstück, insbesondere einem Gegenanschlag (22), am Drehtisch (4) wechselwirken.

4. Kapp- und Gehrungssäge nach Anspruch 1 oder 2, **dadurch gekennzeichnet,**
**daß** die Blockiermittel (19, 20) am Drehtisch (4), vorzugsweise unterhalb der Werkstückauflagefläche (3), angeordnet sind und mit einem Gegenstück, insbesondere einem Gegenanschlag (22), am Träger (1) wechselwirken.

5. Kapp- und Gehrungssäge nach Anspruch 3, **dadurch gekennzeichnet,**
**daß** der Gegenanschlag (22) von einem Auslegerarm (12) des Drehtisches (4) gebildet ist.

6. Kapp- und Gehrungssäge nach einem der Ansprüche 1 bis 4, **dadurch gekennzeichnet,**
**daß** der Gegenanschlag (22) zwischen einer mit den Blockiermitteln (19, 20) zusammenwirkenden Arbeitsstellung und einer mit den Blockiermitteln (19, 20) nicht zusammenwirkenden Freigabestellung verstellbar ist.

7. Kapp- und Gehrungssäge nach einem der vorhergehenden Ansprüche, **dadurch gekennzeichnet,**
**daß** die Blockiermittel (19, 20) in eine funktionslose Freigabestellung verstellbar sind.

8. Kapp- und Gehrungssäge nach einem der vorhergehenden Ansprüche, **dadurch gekennzeichnet,**
**daß** die Blockiermittel (19, 20) mechanisch mittels einer Gewindespindel (24), mit einer Kurbel oder einem Handrad als Betätigungselement (21) verstellbar sind.

9. Kapp- und Gehrungssäge nach einem der Ansprüche 1 bis 7, **dadurch gekennzeichnet,**
**daß** die Blockiermittel (19, 20) mechanisch mittels eines Hebelgetriebes oder einer Kulissenanordnung mit einem dazu passenden Betätigungselement (21) verstellbar sind.

10. Kapp- und Gehrungssäge nach einem der Ansprüche 1 bis 7, **dadurch gekennzeichnet,**
**daß** die Blockiermittel (19, 20) elektromechanisch und mit einem Schalter oder Taster als Betätigungselement (21) verstellbar sind.

11. Kapp- und Gehrungssäge nach Anspruch 10, **dadurch gekennzeichnet,**
**daß** jedem Blockiermittel (19, 20) ein eigener elektromotorischer Antrieb (26) zugeordnet ist und die Kopplung der Antriebe (26) lediglich steuerungstechnisch erfolgt.

12. Kapp- und Gehrungssäge nach einem der vorhergehenden Ansprüche, **dadurch gekennzeichnet,**
**daß** die Blockiermittel (19, 20) als mit einem erhöhten Kraftaufwand überfahrbare Rastmittel ausgeführt sind.

13. Kapp- und Gehrungssäge nach einem der vorhergehenden Ansprüche, **dadurch gekennzeichnet,**
**daß** an der Kapp- und Gehrungssäge eine Winkelskala oder Winkelanzeige für das mit den Blockiermitteln (19, 20) vorgegebene Winkelmaß vorgesehen ist.

## Claims

1. Chop and mitre saw,
comprising a support (1),
comprising a turntable (4) which is rotatably mounted about a vertical axis on or in the support (1) and forms a work rest surface (3),
comprising a retainer (5), attached to the turntable (4), for a saw unit (6) which has a drive motor (7) and a saw blade (8) driven by the latter, and
comprising a workpiece stop (17) which is fastened to the support (1) and is fixed relative to the turntable (4) and against which a workpiece can be placed during the sawing operation,
wherein, preferably, the saw unit (6) is arranged above the work rest surface (3) and can be moved, in particular can be pivoted about a transverse axis, from an inoperative position with raised saw blade (8) into a sawing position with lowered saw blade (8), and vice versa,
wherein the workpiece stop (17), in a central position of the turntable (4), extends at right angles to the plane of the saw blade (8), and
wherein, to make mitre cuts in a workpiece bearing against the workpiece stop (17), the turntable (4) together with the saw unit (6) is rotated by the desired angular measurement to the right or left from the central position,
wherein an adjustable blocking means (19, 20) is assigned to the turntable (4) for both a rotation to the right and a rotation to the left, respectively, by means of which blocking means (19, 20) the rotation of the turntable (4) in the respective direction can be limited to a desired angular measurement,
**characterized**
**in that** the blocking means (19, 20) are coupled to one another in such a way that an adjustment of the one blocking means (19 or 20) is accompanied by an equally large adjustment of the other blocking means (20 or 19) in the opposite direction, and
**in that** the two blocking means (19, 20) can be jointly actuated by one actuating element (21).

2. Chop and mitre saw according to Claim 1, **characterized in that** a counterstop (22) is assigned to the blocking means (19, 20).

3. Chop and mitre saw according to either of the preceding claims, **characterized in that** the blocking means (19, 20) are arranged on the support (1), preferably below the work rest surface (3), and interact with a counterpart, in particular a counterstop (22), on the turntable (4).

4. Chop and mitre saw according to Claim 1 or 2, **characterized in that** the blocking means (19, 20) are arranged on the turntable (4), preferably below the work rest surface (3), and interact with a counterpart, in particular a counterstop (22), on the support (1).

5. Chop and mitre saw according to Claim 3, **characterized in that** the counterstop (22) is formed by an extension arm (12) of the turntable (4).

6. Chop and mitre saw according to one of Claims 1 to 4, **characterized in that** the counterstop (22) can be adjusted between a working position interacting with the blocking means (19, 20) and a release position not interacting with the blocking means (19, 20).

7. Chop and mitre saw according to one of the preceding claims, **characterized in that** the blocking means (19, 20) can be adjusted into a functionless release position.

8. Chop and mitre saw according to one of the preceding claims, **characterized in that** the blocking means (19, 20) can be adjusted mechanically by means of a screw spindle (24), with a crank or a hand wheel as actuating element (21).

9. Chop and mitre saw according to one of Claims 1 to 7, **characterized in that** the blocking means (19, 20) can be adjusted mechanically by means of a lever mechanism or a link arrangement having a suitable actuating element (21).

10. Chop and mitre saw according to one of Claims 1 to 7, **characterized in that** the blocking means (19, 20) can be adjusted electromechanically and with a switch or pushbutton as actuating element (21).

11. Chop and mitre saw according to Claim 10, **characterized in that** a separate electromotive drive (26) is assigned to each blocking means (19, 20) and the drives (26) are coupled only in terms of control.

12. Chop and mitre saw according to one of the preceding claims, **characterized in that** the blocking means (19, 20) are designed as latching means which can be overridden by an increased expenditure of force.

13. Chop and mitre saw according to one of the preceding claims, **characterized in that** an angle scale or angle indicator for the angular measurement predetermined by the blocking means (19, 20) is provided on the chop and mitre saw.

## Revendications

1. Scie à onglet du type combiné,
comprenant un support (1),
avec une table tournante (4) montée sur ou dans le support (1) de manière à pouvoir tourner autour d'un axe vertical, qui forme une surface d'appui pour la pièce (3),
avec une fixation (5) montée sur la table tournante (4) pour une unité de scie (6) qui présente un moteur d'entraînement (7) ainsi qu'une lame de scie (8) entraînée par celui-ci, et
avec une butée pour la pièce (17) fixée sur le support (1) et immobile par rapport à la table tournante (4), sur laquelle peut être posée une pièce lors de l'opération de sciage,
l'unité de scie (6) étant de préférence disposée au-dessus de la surface d'appui pour la pièce (3), et pouvant être déplacée d'une position de repos avec la lame de scie (8) relevée dans une position de sciage avec la lame de scie (8) abaissée et inversement, notamment qui peut être pivotée autour d'un axe transversal,
la butée pour la pièce (17) s'étendant dans une position centrale de la table tournante (4) à angle droit par rapport au plan de la lame de scie (8), et
pour la réalisation de découpages à onglet dans une pièce posée contre la butée pour la pièce (17), la table tournante (4) conjointement avec l'unité de scie (6) étant tournée de la mesure angulaire souhaitée depuis la position centrale vers la droite ou vers la gauche,
un moyen de blocage réglable (19, 20) étant associé à chaque fois à la table tournante (4) à la fois pour une rotation vers la droite et pour une rotation vers la gauche, lequel moyen de blocage permet de limiter la rotation de la table tournante (4) dans la direction respective à une mesure angulaire déterminée,
**caractérisée en ce que**
les moyens de blocage (19, 20) sont accouplés l'un à l'autre de telle sorte qu'un réglage d'un moyen de blocage (19 ou 20) s'accompagne d'un réglage de même ampleur de l'autre moyen de blocage (20 ou 19) dans la direction opposée, et
**en ce que** les deux moyens de blocage (19, 20) peuvent être actionnés ensemble par un élément d'actionnement (21).

2. Scie à onglet du type combiné selon la revendication 1, **caractérisée en ce que** l'on associe aux moyens de blocage (19, 20) une contre-butée (22).

3. Scie à onglet du type combiné selon l'une quelconque des revendications précédentes, **caractérisée en ce que** les moyens de blocage (19, 20) sont disposés sur le support (1), de préférence sous la surface d'appui pour la pièce (3), et coopèrent avec une pièce conjuguée, notamment une contre-butée (22), sur la table tournante (4).

4. Scie à onglet du type combiné selon la revendication 1 ou 2, **caractérisée en ce que** les moyens de blocage (19, 20) sont disposés sur la table tournante (4), de préférence sous la surface d'appui pour la pièce (3), et coopèrent avec une pièce conjuguée, notamment une contre-butée (22), sur le support (1).

5. Scie à onglet du type combiné selon la revendication 3, **caractérisée en ce que** la contre-butée (22) est formée par un bras de potence (12) de la table tournante (4).

6. Scie à onglet du type combiné selon l'une quelconque des revendications 1 à 4, **caractérisée en ce que** la contre-butée (22) peut être réglée entre une position de travail coopérant avec les moyens de blocage (19, 20) et une position de libération ne coopérant pas avec les moyens de blocage (19, 20).

7. Scie à onglet du type combiné selon l'une quelconque des revendications précédentes, **caractérisée en ce que** les moyens de blocage (19, 20) peuvent être réglés dans une position de libération non fonctionnelle.

8. Scie à onglet du type combiné selon l'une quelconque des revendications précédentes, **caractérisée en ce que** les moyens de blocage (19, 20) peuvent être réglés mécaniquement au moyen d'une broche filetée (24), avec une manivelle ou une roue à main servant d'élément d'actionnement (21).

9. Scie à onglet du type combiné selon l'une quelconque des revendications 1 à 7, **caractérisée en ce que** les moyens de blocage (19, 20) peuvent être réglés mécaniquement au moyen d'un mécanisme à levier ou d'un agencement de coulisse avec un élément d'actionnement (21) adapté.

10. Scie à onglet du type combiné selon l'une quelconque des revendications 1 à 7, **caractérisée en ce que** les moyens de blocage (19, 20) peuvent être réglés électromécaniquement et avec un commutateur ou un palpeur en tant qu'élément d'actionnement (21).

11. Scie à onglet du type combiné selon la revendication 10, **caractérisée en ce que** l'on associe à chaque moyen de blocage (19, 20) un entraînement propre par moteur électrique (26), et l'accouplement des entraînements (26) s'effectue uniquement par une technique de commande.

12. Scie à onglet du type combiné selon l'une quelconque des revendications précédentes, **caractérisée en ce que** les moyens de blocage (19, 20) sont réalisés sous forme de moyens d'encliquetage pouvant être transférés au moyen d'un effort accru.

13. Scie à onglet du type combiné selon l'une quelconque des revendications précédentes, **caractérisée en ce que** l'on prévoit sur la scie à onglet du type combiné une échelle angulaire ou un affichage angulaire pour la mesure d'angle prédéterminée avec les moyens de blocage (19, 20).
